# EUROPEAN PATENT APPLICATION

(11) **EP 3 975 019 A1**
(43) Date of publication of application: **30.03.2022**
(21) Application number: 20214093.5
(22) Date of filing: 15.12.2020
(51) Int. Cl.: G06F 21/57, G06F 21/64

(54) **SECURED SOFTWARE WORKLOAD PROVISIONING TO A TRUSTED EXECUTION ENVIRONMENT**

(30) Priority: 28.09.2020 US 202017035366
(71) Applicant: Red Hat, Inc., Raleigh, North Carolina 27601 (US)
(72) Inventor: BURSELL, Michael, Raleigh, North Carolina 27601 (US)
(74) Representative: Murgitroyd & Company

(57) **Abstract**

Systems and methods for providing secured provisioning of workloads to a trusted execution environment (TEE) using a trusted client agent (TCA) are disclosed. In one implementation, a processing device may receive, at a software TCA residing in a a host computer system of a computing environment, a software provisioning command from an orchestration system of the computing environment, wherein the software provisioning command identifies a workload to be provisioned to a TEE. The processing device may determine a validation measure associated with the workload. Responsive to determining that the validation measure satisfies a predetermined condition, the processing device may perform the software provisioning operation to deploy the workload at the TEE.

## Description

### TECHNICAL FIELD

The present disclosure is generally related to computer systems, and more particularly, to secured software workload provisioning to a trusted execution environment.

### BACKGROUND

Cloud computing defines a model for enabling ubiquitous, convenient, on-demand network access to a shared pool of configurable computing resources (e.g., networks, servers, storage, applications, and services) that can be rapidly provisioned and released with minimal management effort or service provider interaction. Essential characteristics of the cloud computing model include on demand self-service, broad network access, resource pooling, rapid elasticity and measured service. The cloud computing model comprises several service models, including Software as a Service (SaaS), Platform as a Service (PaaS), and Infrastructure as a Service (IaaS). The cloud computing model may be implemented according to one of several deployment models, including private cloud, community cloud, public cloud and hybrid cloud.

### SUMMARY OF THE INVETION

Accordingly, the present invention is directed to methods, systems, and non-transitory computer-readable storage media according to the appended claims.

In an aspect the present invention is directed to a method, comprising: receiving, by a software trusted client agent (TCA) residing in a host computer system of a computing environment, a software provisioning command from an orchestration system of the computing environment, wherein the software provisioning command identifies a workload to be provisioned to a trusted execution environment (TEE) of the computing environment;
determining, by the TCA, a validation measure associated with the workload; and responsive to determining that the validation measure satisfies a predetermined condition, performing the software provisioning operation to deploy the workload at the TEE.

In an embodiment of the method according to the present invention, the validation measure may be a signing certificate associated with the workload.

In an embodiment of the method according to the present invention, determining that the validation measure satisfies the predetermined condition may comprise determining that a signing certificate of the workload matches a second signing certificate of a set of approved certificates associated with the TCA. In addition thereto, the signing certificate of the workload may further be associated with at least one of a tenant of the computing environment, an approved repository of the workload, an independent software vendor, or the orchestration system.

In an embodiment of the method according to the present invention, the TCA may be provisioned by an administration system, and wherein the TCA may be associated with a set of approved certificates during the provisioning by the administration system. In addition thereto, the method may further comprise further comprising at least one of:
adding certificates to the set of approved certificates of the TCA; or
removing certificates from the set of approved certificates of the TCA.

In an embodiment, the method according to the present invention may further comprise determining, by the TCA, whether the workload is encrypted using a predetermined encryption key; and responsive to determining that the workload is encrypted using the predetermined encryption key, performing the software provisioning operation to deploy the workload to the TEE. In addition thereto, the TCA may be to decrypt, using the predetermined private key, the workload before deploying the workload to the TEE.

In an embodiment of the method according to the present invention, the TCA is associated with one or more tenants of the computing environment.

In an aspect the present invention is directed to a processing device operatively coupled to the memory, wherein the processing device is further to: perform, at a host computer system of a computing environment, a provisioning process of a software trusted client agent (TCA) to the host computer system; determine a set of signing certificates associated with one or more trusted signing parties for validating signing certificates of workloads being deployed to a trusted execution environment (TEE) of the computing environment; and associate the set of certificates with the TCA.

In an embodiment of the system according to the present invention, the processing device may further be to associate one or more provisioning policies with the TCA, wherein each provisioning policy is associated with a tenant of the computing environment and determines how to validate signing certificates associated with workloads of the tenant.

In an embodiment of the system according to the present invention, the TCA is to receive a software provisioning command from an orchestration system, wherein the software provisioning command identifies a workload to be provisioned to the TEE, and wherein the TCA is to deploy the workload to the TEE responsive to determining that a singing certificate of the workload matches a second certificate of the set of certificates associated with the TCA.

In an embodiment of the system according to the present invention, the processing device may further be to add certificates to the set of certificates associated with the TCA and to remove certificates from the set of certificates associated with the TCA.

In an embodiment of the system according to the present invention, the processing device may further be to associate one or more predetermined private keys to the TCA, wherein each private key of the one or more predetermined private keys is associated with a tenant of the computing environment and is used to encrypt and decrypt workloads associated with the tenant.

In an embodiment of the system according to the present invention, the TCA is associated with one or more tenants of the computing environment.

In an aspect, the present invention is directed to a non-transitory computer-readable storage medium comprising executable instructions that, when executed by a processing device, cause the processing device perform the method as described above or to:
receive, at a software trusted client agent (TCA) residing in a host computer system of a computing environment, a software provisioning command from an orchestration system of the computing environment, wherein the software provisioning command identifies a workload to be provisioned to a trusted execution environment (TEE) of the computing environment;
determine a validation measure associated with the workload; and
responsive to determining that the validation measure satisfies a predetermined condition, perform the software provisioning operation to deploy the workload at the TEE.

In an embodiment of the non-transitory computer-readable storage medium according to the present invention, the validation measure may be a signing certificate associated with the workload.

In an embodiment of the non-transitory computer-readable storage medium according to the present invention, to determine that the validation measure satisfies the predetermined condition, the processing device may be to determine that a signing certificate of the workload matches a second signing certificate of a set of approved certificates associated with the TCA.

In an embodiment of the non-transitory computer-readable storage medium according to the present invention, the signing certificate of the workload may be associated with at least one of a tenant of the computing environment, an approved repository of the workload, an independent software vendor, or the orchestration system.

In an embodiment of the non-transitory computer-readable storage medium according to the present invention, the processing device may further be to determine whether the workload is encrypted using a predetermined encryption key; and, responsive to determining that the workload is encrypted using the predetermined encryption key, perform the software provisioning operation to deploy the workload to the TEE.

### BRIEF DESCRIPTION OF THE DRAWINGS

The present disclosure is illustrated by way of examples, and not by way of limitation, and may be more fully understood with references to the following detailed description when considered in connection with the Figures, in which:
**FIG. 1** illustrates an exemplary computing environment in which implementations of the disclosure may operate.
**FIG. 2** illustrates the process of implementing a secured workload provisioning to a trusted execution environment (TEE) based on an approved signing certificate, in accordance with one or more aspects of the present disclosure.
**FIG. 3** is a flow diagram of an example method of performing secured provisioning of workload to a trusted execution environment (TEE) using a trusted client agent (TCA), in accordance with one or more aspects of the present disclosure.
**FIG. 4** illustrates an example method for validating an encrypted and signed a workload before provisioning to a trusted execution environment (TEE), in accordance with one or more aspects of the present disclosure.
**FIG. 5** depicts a block diagram of an example computer system in accordance with one or more aspects of the present disclosure
**FIG. 6** is a flow diagram of an example method of provisioning a trusted client agent (TCA) by an administration system of a computing environment, in accordance with one or more aspects of the present disclosure.
**FIG. 7** depicts a block diagram of an illustrative apparatus operating in accordance with one or more aspects of the disclosure.
**FIG. 8** illustrates a diagrammatic representation of a machine in the exemplary form of a computer system, in accordance with one or more aspects of the present disclosure.

### DETAILED DESCRIPTION

Described herein are methods and systems for providing secured provisioning of workloads to a trusted execution environment (TEE) using a trusted client agent (TCA). A workload may refer to an application, a data processing job, file access command, or any other process running within the TEE. A TEE may be an isolated execution environment, within a host computer system, providing security features such as isolated execution, integrity of applications executing with the TEE, and confidentiality of their data. Many computing environments are configured to provide on-demand availability of computing resources to consumers without direct management by the consumers. An example of this configuration is cloud computing. Cloud computing defines a computing environment model for enabling ubiquitous, convenient, on-demand network access to a shared pool of configurable computing resources (e.g., networks, servers, storage, applications, and services) that can be rapidly provisioned and released with minimal management effort or service provider interaction. In a cloud computing environment, the computing resources may be hosted by an entity and made available to multiple consumers over the Internet, which is often represented as a cloud. One of the important administrative tasks with respect to cloud environments is performing software provisioning tasks (e.g., installations and/or updates of workloads) on nodes of the cloud environment. Monitoring and distribution of workloads to the hosts of the cloud environment is performed by an orchestration system. In order to ensure confidentiality and isolation of the various workloads running in the cloud environment, a trusted execution environment may be deployed at each host of the cloud environment, enabling secured execution of the workloads as well as encrypted memory for use by respective tenants, such that each tenant is assigned a separate encrypted memory region within the TEE.

Because a cloud environment can host multiple tenants, each tenant expects its workloads and processes to be deployed and executed without interference or overlap with workloads from other tenants. Additionally, if the security of a host computer system or an orchestration system becomes compromised by a malicious party, such a malicious party would be able to tamper with the workloads of the tenants, as well as to various applications and components running on the host, such as virtual machines, containers, etc. Accordingly, if compromised workloads are allowed to be provisioned to the TEE, malicious code may be permitted to be executed within the TEE, thus compromising the cloud environment as a whole or at least the host system of the respective TEE.

The present disclosure alleviates the above-noted and other deficiencies by enabling secured software workload provisioning to a trusted execution environment (TEE) using a trusted client agent (TCA). A TCA may be a software agent that securely communicates with the orchestration system of the cloud environment and TEEs within hosts of the cloud environment in order to perform various software provisioning operations (e.g., software installation and/or update operations) at the TEEs. In certain implementations, a TCA of a host computer system of a cloud environment may receive a software provisioning command to provision a workload to a TEE of the cloud environment. The software provisioning command may be received from an orchestration system, based on an occupancy level of the host system for example. In an implementation, the provisioning command may be requested by a tenant of the cloud environment, in order to deploy a workload associated with the tenant to the TEE. In one implementation, the TCA may perform one or more validation measures of the workload in order to determine whether or to provision the workload to the TEE. As an example, the one or more validation measures may involve validating one or more signing certificates of the workload to determine if the workload is signed by a trusted party. In another example, the validation measure may involve determining whether the workload is encrypted and whether a private key associated with the TCA can be used for decrypting the workload, as explained in more details herein.

In an implementation, the TCA may be a trusted agent that is utilized by one or more tenants to deploy workloads associated with the one or more tenants at a TEE. A TCA may be installed on each host system within the computing environment and may communicate with the orchestration system and the processes of cloud environment in order to perform various software provisioning operations (e.g., software installation and/or update operations) at TEEs of the cloud environment. In an illustrative example, a workload provisioning operation may be initiated by the orchestration service, which may transmit a software provisioning command to one of the TCAs residing on the hosts of the cloud environment. The TCA may perform certain validation measures of the workload in order to decide whether or not the workload is approved for provisioning to a TEE, based on predetermined policies that may be defined when the TCA is provisioned. As an example, validation measure may include validating a singing certificate of the workload to ensure that the certificate matches one of a set of approved signing certificates. Another validation measure example is to determine whether the workload is encrypted using a predetermined encryption key.

In certain implementations, a TCA may be provisioned at a given host system by an administration system (e.g., a could management service) of the host. During the process of provisioning the TCA, the administration system may define a set of cryptographic certificates and associate the set of certificates with the TCA, to be used in validating signing signatures of a given workload. In an implementation, the set of certificates may be associated with one or more tenants of the cloud environment. The administration system may further define a provisioning policy indicating that workloads that are signed by at least one tenant certificate that matches another certificate from the set of certificates of the TCA may be provisioned to a TEE of the cloud environment. In this case, when a TCA receives a workload associated with a given tenant, the TCA may determine a signing party of the workload. If the signing party is a tenant certificate that matches one of the set of certificates of the TCA, the TCA may determine that the workload is approved for provisioning, and may further deploy the workload to the TEE. In an implementation, the TCA may determine that two signing certificates match by determining that the two certificates have the same owner, that the two certificates have a matching public key value, or a combination thereof. On the other hand, if the workload is not signed, or if the workload is signed by a signing certificate that does not match a certificate in the set of certificates, the TCA may determine that the workload may be restricted from provisioning to the TEE. The TCA may further decline to deploy the workload at the TEE. In certain implementation, the TCA may return a predetermined error to the orchestration system, indicating that the workload has failed the validation process for provisioning at the TEE.

In other implementations, the set of certificates of the TCA may be associated with one or more trusted third parties. As an example, a trusted third party may be an independent software vendor (ISV) associated with the workload or a repository where the workload is stored. In yet another example, one or more of the set of certificates may be associated with the orchestration system of the computing environment. In an implementation, the set of certificates of the TCA may include certificates associated with one or more ISVs, one or more workload repositories, one or more tenants, the orchestration system, other trusted parties, or a combination thereof. The administration system may further define a provisioning policy indicating that workloads that are signed by at least one certificate that matches another certificate from the set of certificates of the TCA may be provisioned to the TEE. Alternatively, the provisioning policy may indicate that workloads that are signed by a minimum number of trusted parties may be provisioned to the TEE. In this case, when a TCA receives a workload associated with a given trusted third party, the TCA may determine a signing party of the workload. If the signing party is a certificate that matches one of the set of certificates of the TCA, the TCA may determine that the workload is approved for provisioning, and may further deploy the workload to the TEE. In an implementation, the TCA may determine that two signing certificates match by determining that the two certificates have the same owner, that the two certificates have a matching public key value, or a combination thereof. On the other hand, if the workload is not assigned, or if the workload is signed by a signing certificate that does not match a certificate in the set of certificates, the TCA may determine that the workload may be restricted from provisioning to the TEE. The TCA may further decline to deploy the workload at the TEE.

In certain implementations, a provisioning policy of the TCA may require that a workload be encrypted, alternatively or in addition to being signed by a trusted party. In an illustrative example, the TCA may require certain workloads (e.g., security-critical workloads) be encrypted under a private encryption key that is associated with a trusted party. The private encryption key for decrypting the workload may only be accessible by the TCA. Accordingly, encrypted workloads may be protected from undesirable access by a compromised or not trusted orchestration system while transmitting the workload to the TCA, thus reducing the attack surface for the security-critical workloads. In one implementation, a workload may be encrypted by the same party that is signing the workload. In another implementation, the workload may be encrypted with one party and may be signed by a different party. In an implementation, the TCA may decrypt the workload, using a predetermined private key associated with the workload. Upon successful decryption of the workload, the TCA may perform signing validation of the party signing the workload based on the set of certificates of the TCA, as explained above, and may deploy the workload to the TEE when the signing certificate of the workload is validated. In certain implementation, the TCA may re-encrypt the workload prior to deploying the workload to the TEE.

Thus, the systems and methods described herein represent improvements to the functionality of computing environments, by secured provisioning of workloads to TEEs, using a trusted client agent. The ability to have a software agent that is trusted by the tenants of a cloud environment to validate workloads before executing on the trusted execution environment improves the security of the cloud environment as it prohibits an untrusted workloads from being deployed to the execution environment. Additionally, enabling tenants of a computing environment to have one or more TCA processes that are trusted with provisioning workloads can provide flexibility in security settings of workload provisioning, such that one TCA associated with one tenant can be configured more or less stringently than another TCA associated with the same tenant. Further, the ability to encrypt workloads further protect the confidentiality of the workloads from an orchestration system that is transmitting the workload to the TCA and from repositories storing the workload, thus reducing the attach surface of workloads that are deployed to the cloud environment.

The systems and methods described herein may be implemented by hardware (e.g., general purpose and/or specialized processing devices, and/or other devices and associated circuitry), software (e.g., instructions executable by a processing device), or a combination thereof. Various aspects of the above referenced methods and systems are described in details herein below by way of examples, rather than by way of limitation.

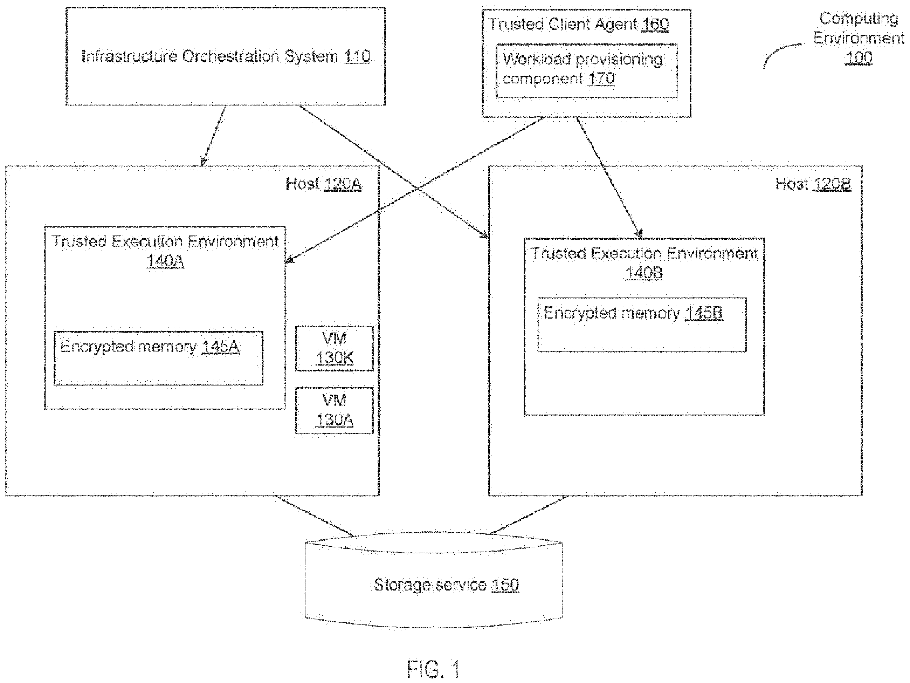

FIG. 1 schematically depicts a high-level component diagram of an example computing environment 100 implemented in accordance with one or more aspects of the present disclosure. Computing environment 100 may refer to cloud computing device (e.g., host machine, virtual machine, container), a distributed computing device (e.g., edge computing node), another computing device, or a combination thereof. In certain implementations, computing device 100 may include one or more computing devices at a single physical location (e.g., data center) or across multiple physical locations (e.g., different data centers). In one example, computing environment 100 may include infrastructure orchestration system 110, host systems 120A-B, and storage service 150.

Infrastructure orchestration system 110 may manage the computing environment resources. In some implementations, infrastructure orchestration system 110 may further perform the functions of a software provisioning controller operating in accordance with one or more aspects of the present disclosure. Infrastructure orchestration system 110 may manage deployment, configuration, and maintenance of the host computers and virtual machines. Infrastructure orchestration system 110 may implement fine-grained life cycle management, user and group role-based access control, integrated subscription management, as well as advanced graphical user interface (GUI), command line interface (CLI), and/or API access.

While in the illustrative example of Fig. 1 infrastructure orchestration system 110 is shown as running on a separate physical machine, in various alternative implementations infrastructure orchestration system 110 may be co-located with one of hosts 120A-B.

Computing environment 100 may further include one or more host computer systems 120A-120B, on which virtual machine instances 130A-130K may run. In some implementations, hosts 120A-B may be physical servers (e.g., physical machines), virtual servers (e.g., implementing a hypervisor and virtual machines, containers), or a combination thereof. One or more of the hosts may be absent virtualization technology and one or more of the hosts may provide one or more levels of virtualization. The levels of virtualization may include hardware level virtualization, operating system level virtualization, other virtualization, or a combination thereof. The hardware level virtualization may involve a hypervisor (e.g., virtual machine monitor) that emulates portions of a physical system and manages one or more virtual machines. In contrast, operating system level virtualization may include a single operating system kernel that manages multiple isolated virtual containers. Each virtual container may share the kernel of the underlying operating system without requiring its own kernel.

Trusted execution environments (TEEs) 140A-B may be a set of one or more computing processes, threads, or instruction streams and in one example it may be a set with a single process (e.g., user process) and in another example it may be a set of multiple processes (e.g., all processes of a particular virtual machine). The trusted execution environment may be implemented by one or more processors coupled to a storage device (e.g., memory). The processor may protect data of the set of processes from being accessed by other processes that may be more or less privileged. For example, in a trusted execution environment a central processing processor (CPU) may guard data of a lower privileged process (e.g., user process or virtual machine process) from being accessed by a higher privileged process (e.g., kernel process or hypervisor process). The data being guarded may include executable data (e.g., code), non-executable data (e.g., input data or output data), other data, or a combination thereof. In some examples, trusted execution environments 140A-B may be provided by special instructions and features of the processor and may be the same or similar to Software Guard eXtensions (SGX)^{®} provided by Intel^{®}, TDX provided by Intel^{®}, Memory Encryption Technology provided by AMD^{®} (e.g., Secure Encrypted Virtualization (SEV)^{®}, Secure Memory Encryption(SME, SME-ES), TrustZone^{®} provided by ARM^{®}, other technology, or a combination thereof. In some or all of these examples, the processor may guard the data by establishing one or more encrypted memory regions 145A-B.

Each of the trusted execution environments 140A-B may include one or more trusted execution environment instances (e.g., TEE instances). An instance of the trusted execution environment may be established for a particular set of one or more processes and may be associated with a particular memory encrypted region. The instances of a trusted execution environment may be provided by the same hardware (e.g., processor and memory) but each instance may be associated with a different memory encrypted region and a different set of one or more processes (e.g., set including an individual process or set of all processes within a container). TCA 160 may securely provision workloads to TEE 140A-B. As shown in FIG. 1, trusted execution environments 140A-B may be provided by a respective host system that may guard data associated with a particular instance using one or more encrypted memory regions 145A-B.

Trusted client agent (TCA) 160 may be a trusted process running within computing environment 100. TCA may be trusted by one or more tenants of the computing environemnt and may be responsible for provisioning, remote management and monitoring of one or more workloads within one or more TEE. Additionally, one tenant of TEE 140A-B may be associated with one or more TCA, for example to configure security settings more or less stringently for each associated TCA. In an implementation, TCA 160 may act as a client with respect to hosts 120A-120B, and may communicate with TEE 140A-B via XML-RPC or any other suitable protocol. In one implementation, TCA 160 may be installed within a dedicated TEE environment. In some implementations, a transport layer security scheme (e.g., secure socket layer (SSL)) may be implemented for secure data and command transmission between TCA 160, infrastructure orchestration system 110, TEE 140A-B, and/or software repositories implemented by the shared storage service 150. TCA 160 may further perform the functions of a software workload provisioning agent using workload provisioning component 170 and operating in accordance with one or more aspects of the present disclosure.

Workload provisioning component 170 may be responsible for performing certain validation measures (e.g., inspection of signing certificates) of a workload that is received at TCA 160 for provisioning to TEE 140A-B. In one implementation, upon receiving a workload from infrastructure orchestration system 110 for provisioning to TEE 140A-B, workload provisioning component 170 may determine a signing party of the workload. If the signing party is associated with a signing certificate that matches one of a predetermined set of certificates, workload provisioning component 170 may determine that the workload is approved for provisioning, and may further deploy the workload to the respective TEE. In certain implementations, the predetermined set of certificates may be associated with at least one of an approved tenant of TEE 240A-B, an approved repository of workloads, an approved ISP, orchestration system 100, or a combination thereof. In certain implementations, workload provisioning component 170 may further require that the workload be encrypted by a predetermined encryption key, in order to approve the workload for provisioning to the TEE 140A-B. In this case, workload provisioning component 170 may decrypt the workload, using a private key corresponding to the key used for encryption. Upon successful decryption of the workload, workload provisioning component 170 may validate the signing party of the workload based on the predetermined set of certificates of TCA 160, as explained above, and may deploy the workload to TEE 140A-B when the signing party of the workload is validated.

Encrypted memory regions 145A-B may be regions of memory that are assigned to a set of one or more processes and that store data in an encrypted form. The data may be encrypted and decrypted by hardware devices using cryptographic keys that are accessible to the hardware devices and may be inaccessible to processes executed by the hardware devices, this may be the same or similar to hardware based encryption, hardware level encryption, other term, or a combination thereof. The hardware devices may include one or more general purpose processors (e.g., CPUs), graphical processing units (GPUs), secure elements (SE), secure cryptoprocessors, memory controller, other integrated circuit, or a combination thereof.

The encrypted memory region may be a contiguous or non-contiguous portion of physical memory, virtual memory, logical memory, or other abstraction and may a portion of primary memory (e.g., main memory), auxiliary memory (e.g., solid state storage), adapter memory, other persistent or non-persistent storage, or a combination thereof. In one example, the encrypted memory region may be a portion of main memory associated with a particular process and the processor may encrypt the data when storing the data in the memory region and may decrypt the data when accessing the data in the memory region. The data in the memory region may be transformed (e.g., encrypted or decrypted) before, during, or after it is stored in or accessed from the memory region. The data may remain in an encrypted form while in the encrypted memory region and may or may not remain in an encrypted form when stored within the processor.

The shared storage service 150 may be implemented by one or more storage nodes, one or more container servers to manage mappings of object containers, one or more object servers to manage objects (such as files) on the storage nodes, and one or more authentication servers to manage accounts defined within the object storage service. In some implementations, the shared storage service may further implement one or more software repositories for storing virtual machine images, operating system code and metadata, application code and metadata, workload images, software update code and metadata, or a combination thereof.

Computing environment 100 may include one or more networks. The one or more networks may include a public network (e.g., the internet), a private network (e.g., a local area network (LAN) or wide area network (WAN)), or a combination thereof. In one example, the network may include a wired or a wireless infrastructure, which may be provided by one or more wireless communications systems, such as a wireless fidelity (WiFi) hotspot connected with the network and/or a wireless carrier system that may be implemented using various data processing equipment, communication towers, etc.

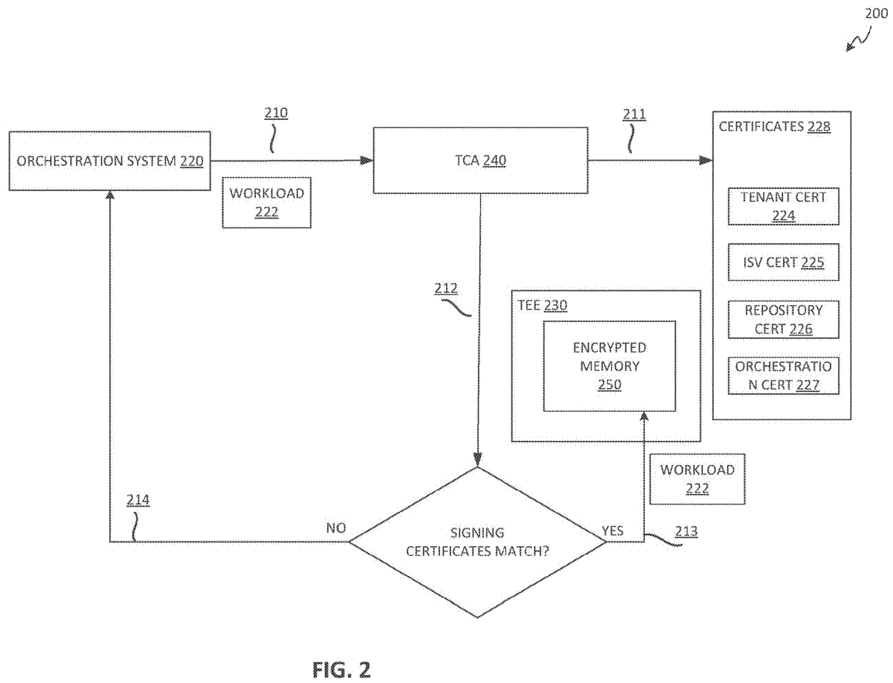

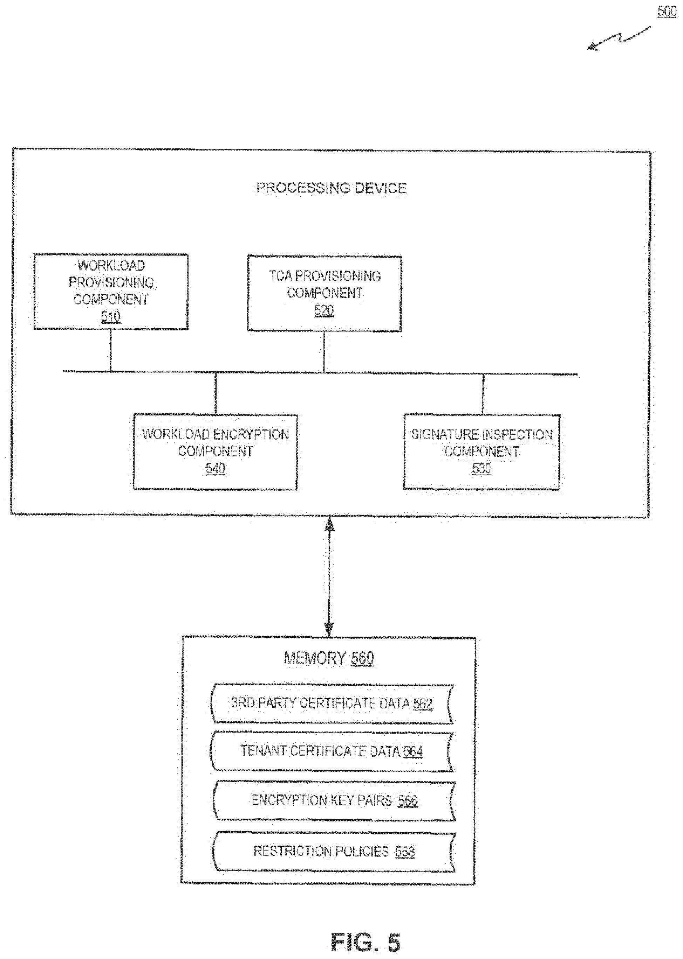

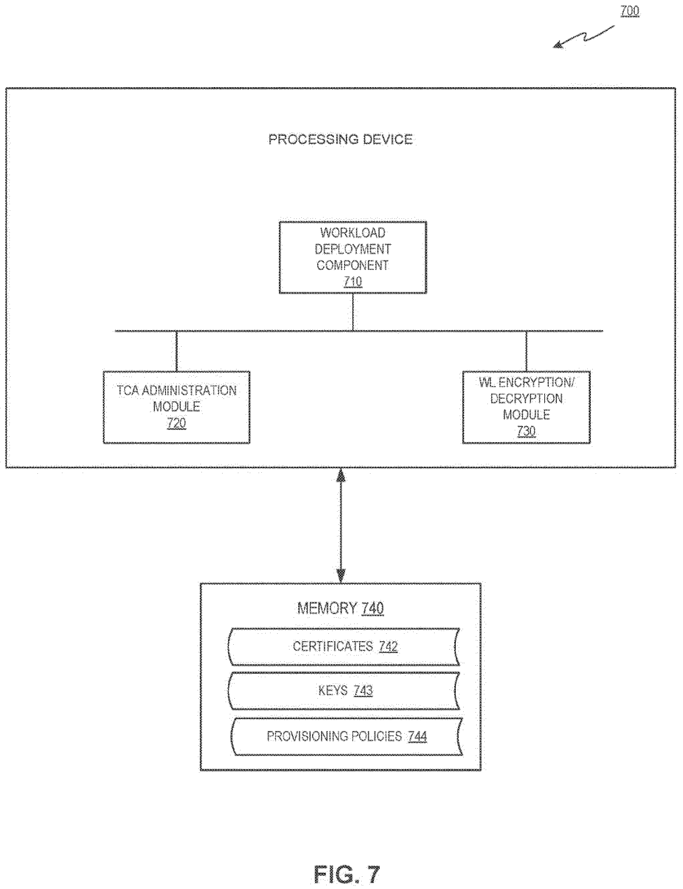

**FIG. 2** illustrates the process of implementing a secured workload provisioning to a TEE based on an approved signing certificate, in accordance with one or more aspects of the present disclosure. Method 200 may be performed by processing logic that includes hardware (e.g., circuitry, dedicated logic, programmable logic, microcode, etc.), software (e.g., instructions run on a processor to perform hardware simulation), or a combination thereof. Method 200 or each of its individual functions, routines, subroutines, or operations may be performed by one or more processors of a computer system (e.g., the computer system 500 of **FIG. 5** or apparatus 700 of **FIG. 7**) implementing the method. In an illustrative example, method 200 may be performed by a single processing thread. Alternatively, method 200 may be performed by two or more processing threads, each thread implementing one or more individual functions, routines, subroutines, or operations of the method. In an illustrative example, the processing threads implementing method 200 may be synchronized (e.g., using semaphores, critical sections, or other thread synchronization mechanisms).

Method 200 starts at operation 210. At operation 210, orchestration system 220 sends a software provisioning command to TCA 240. In an implementation, orchestration system 220 may be the same or similar to infrastructure orchestration system 110 of **FIG. 1****,** TEE 230 may be the same or similar to trusted execution environment 140A-B of **FIG. 1****,** and TCA 240 may be the same or similar to trusted execution environment 160 of **FIG. 1****.** In an implementation, the software provisioning command may contain workload 222 for provisioning to encrypted memory 250 of TEE 230. The software provisioning command may be initiated by a tenant of TEE 230 and may be directed to orchestration system 220 for execution by a TCA residing in one of the hosts of a computing environment (e.g., a cloud computing environment).

Upon receiving the provisioning command, TCA 240, at operation 211, may perform a validation process to ensure that workload 222 is approved for provisioning to TEE 230. In certain implementations, TCA 240 may determine a signing party of workload 222 and may further determine a cryptographic certificate associated with the singing party. TCA 240 may retrieve a set of certificates 228 associated with TCA 240, to determine whether the signing certificate of workload 222 matches one of certificates 228. In an implementation, set of certificates 228 may be an approved set of certificates that are determined by an administration system and associated with TCA 240 when TCA 240 was provisioned. In an implementation, certificates 228 may include tenant certificate 224, ISV certificate 225, repository certificate 226, and orchestration certificate 227.

At operation 212, TCA 240 may compare the signing certificate of workload 222 with the set of certificates 228, to determine if the signing certificate matches one of certificates 228. In an illustrative example, if workload 222 is signed by a tenant with a certificate that matches tenant certificate 224, then TCA 240 may determine that workload 222 is approved for provisioning to TEE 230. Similarly, if workload 222 is signed by an ISV with a certificate that matches ISV certificate 225, then workload 222 may be approved for provisioning to TEE 230. If workload 222 is signed by the repository where workload 222 is stored, and if the repository have a certificate that matches repository certificate 226, then workload 222 may be approved for provisioning to TEE 230. Finally, if workload 222 is signed by orchestration system 220 and is associated with a signing certificate that matches orchestration certificate 227, then workload 222 may be approved for provisioning to TEE 230. Upon determining that workload 222 is approved for provisioning to TEE 230, TCA 240, at operation 213, may deploy workload 222 to encrypted memory 250 of TEE 230.

At operation 214, if TCA 240 determines that workload 222 is not signed, or if TCA 240 determines that workload 222 is signed by a signing certificate that does not match any of certificates 228, TCA 240 may determine that workload 222 should be restricted from provisioning to TEE 230. TCA 240 may further decline to deploy workload 222 at TEE 240. In an implementation, TCA 240 may notify orchestration system 220 that the provisioning command has not been performed, for example by returning a certain error to orchestration system 220, indicating that workload 222 has failed the security validation process for provisioning at TEE 230.

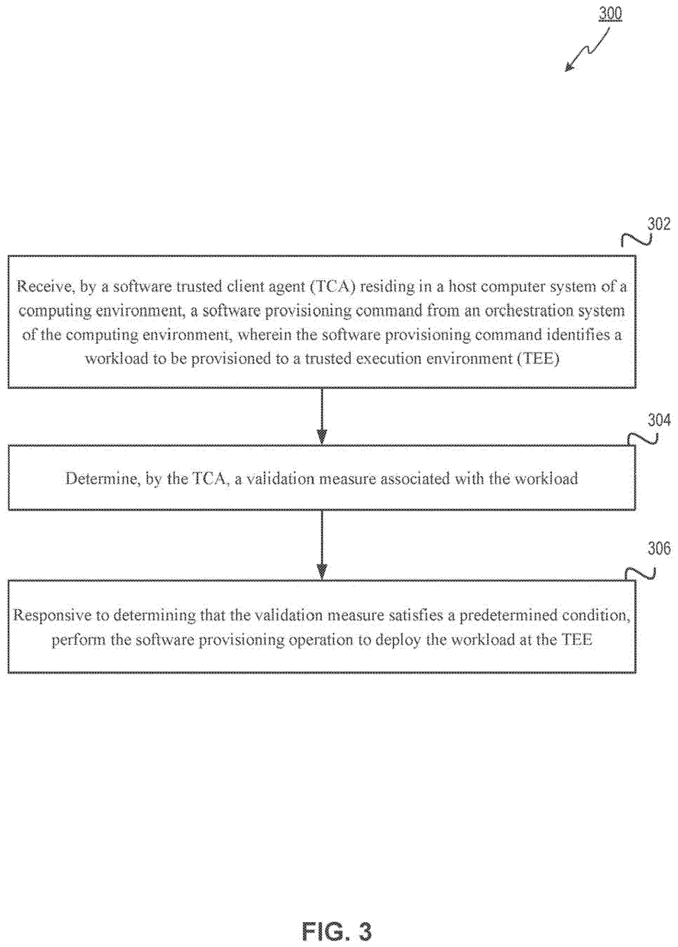

**FIG. 3** is a flow diagram of an example method of performing secured provisioning of workload to a trusted execution environment (TEE) using a trusted client agent (TCA), in accordance with one or more aspects of the present disclosure. Method 300 may be performed by processing logic that includes hardware (e.g., circuitry, dedicated logic, programmable logic, microcode, etc.), software (e.g., instructions run on a processor to perform hardware simulation), or a combination thereof. Method 300 or each of its individual functions, routines, subroutines, or operations may be performed by one or more processors of a computer system (e.g., the computer system 500 of **FIG. 5** or apparatus 700 of **FIG. 7**) implementing the method. In an illustrative example, method 300 may be performed by a single processing thread. Alternatively, method 300 may be performed by two or more processing threads, each thread implementing one or more individual functions, routines, subroutines, or operations of the method. In an illustrative example, the processing threads implementing method 300 may be synchronized (e.g., using semaphores, critical sections, or other thread synchronization mechanisms). Alternatively, the processing threads implementing method 300 may be executed asynchronously with respect to each other. Therefore, while **FIG. 3** and the associated description lists the operations of method 300 in certain order, various implementations of the method may perform at least some of the described operations in parallel or in arbitrary selected orders.

Referring to **FIG. 3****,** at operation 302, the processing logic executing at a software trusted client agent (TCA) may receive a software provisioning command from an orchestration system. The TCA is residing in a host computer system of a computing environment and the software provisioning command identifies a workload to be provisioned to a trusted execution environment (TEE). In implementations, the TCA may be trusted to provision workloads by one or more tenants of the computing environment, as explained in more details herein.

At operation 304, the processing logic may determine a validation measure associated with the workload. In implementations, the validation measure may include inspecting a signing certificate of the workload to determine whether or not the singing certificate matches one of an approved set of certificates associated with the TCA, as explained in more details herein. In an implementation, set of approved certificate may include certificates associated with tenants, certificates associated with repositories, certificates associated with the orchestration system, certificates associated with one or more ISVs, or a combination thereof.

At operation 306, responsive to determining that the signing certificate satisfies the predetermined condition of matching a certificate in the set of approved certificates, the processing logic may perform the software provisioning operation to deploy the workload to the TEE. In an implementation, the processing logic may further require that the workload is encrypted prior to deploying the workload to the TEE. In this case, the processing logic may decrypt the workload before validating the signing certificate and may re-encrypt the workload before deploying to the TEE if the signing certificate validation is successful, as explained in more details herein.

For simplicity of explanation, the methods of this disclosure are depicted and described as a series of acts. However, acts in accordance with this disclosure may occur in various orders and/or concurrently, and with other acts not presented and described herein. Furthermore, not all illustrated acts may be required to implement the methods in accordance with the disclosed subject matter. In addition, those skilled in the art will understand and appreciate that the methods could alternatively be represented as a series of interrelated states via a state diagram or events. Additionally, it should be appreciated that the methods disclosed in this specification are capable of being stored on an article of manufacture to facilitate transporting and transferring such methods to computing devices. The term article of manufacture, as used herein, is intended to encompass a computer program accessible from any computer-readable device or storage media. Each method described herein and/or each of its individual functions, routines, subroutines, or operations may be performed by one or more processing devices of the computer system (e.g., computing environment 100 of **Fig. 1**) implementing the method. In certain implementations, the method may be performed by a single processing thread. Alternatively, the method may be performed by two or more processing threads, each thread executing one or more individual functions, routines, subroutines, or operations of the method. In an illustrative example, the processing threads implementing the method may be synchronized (e.g., using semaphores, critical sections, and/or other thread synchronization mechanisms). Alternatively, the processing threads implementing the method may be executed asynchronously with respect to each other.

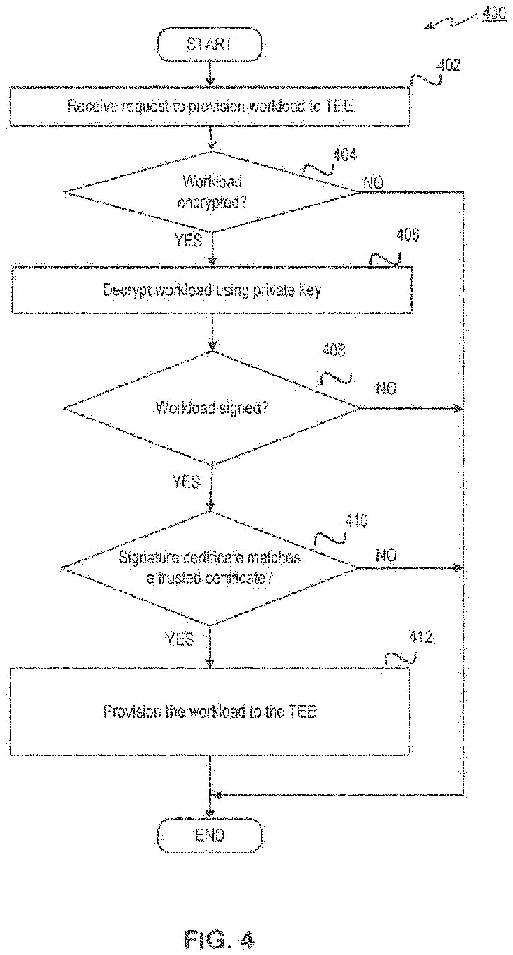

**FIG. 4** illustrates an example method for validating an encrypted and signed a workload before provisioning to a trusted execution environment (TEE), in accordance with one or more aspects of the present disclosure. Method 400 may be performed by processing logic that includes hardware (e.g., circuitry, dedicated logic, programmable logic, microcode, etc.), software (e.g., instructions run on a processor to perform hardware simulation), or a combination thereof. Method 400 or each of its individual functions, routines, subroutines, or operations may be performed by one or more processors of a computer system (e.g., the computer system 500 of **FIG. 5** or apparatus 700 of **FIG. 7**) implementing the method. In an illustrative example, method 400 may be performed by a single processing thread. Alternatively, method 400 may be performed by two or more processing threads, each thread implementing one or more individual functions, routines, subroutines, or operations of the method. In an illustrative example, the processing threads implementing method 400 may be synchronized (e.g., using semaphores, critical sections, or other thread synchronization mechanisms). Alternatively, the processing threads implementing method 400 may be executed asynchronously with respect to each other. Therefore, while **FIG. 4** and the associated description lists the operations of method 400 in certain order, various implementations of the method may perform at least some of the described operations in parallel or in arbitrary selected orders.

Method 400 starts at block 402. At block 402 of method 400, processing logic receives a request to provision a workload to a TEE. At block 404, processing logic determines whether the workload is encrypted. If the workload in not encrypted, then the method ends. If the workload is encrypted, the method continues to block 406.

At block 406, processing logic decrypt the workload using a stored private key, in order to validate a signing certificate of the workload. In an implementation, a TCA executing the processing logic may include a stored private key that corresponds to a public key that was used for encrypting the workload (e.g., by a tenant, ISV, a repository, and the like). The method then proceeds to block 408 to validate a signature of the workload.

At block 408, the processing logic determines whether the workload is signed. If the workload is unsigned, then the method ends. If the workload is signed, the method continues to block 410. At block 410, the processing logic determines whether the signing certificate of the workload matches a trusted certificate from a set of trusted certificates. The set of trusted certificates may be provisioned and associated with the TCA, by an administrative process, at the time of provisioning the TCA. If the signing certificate does not match a trusted certificate, the method ends. If the signing certificate matches a trusted certificate, the method proceeds to block 412.

At block 412, processing logic provisions the verified workload to the TEE by deploying the workload at an encrypted memory of the TEE. The method then ends.

**FIG. 5** depicts a block diagram of an example computer system 500 in accordance with one or more aspects of the present disclosure. Computer system 500 may include one or more processing devices and one or more memory devices. In the example shown, computer system 500 may include a workload provisioning component 510, TCA provisioning component 520, signature inspection component 530, and workload encryption component 540. Components of computer system 500 may access memory 560 to implement methods in accordance to aspects of the disclosure.

Workload provisioning component 510 may enable a processing device of computer system 500 to perform workload provisioning to a trusted execution environment (TEE). In an implementation, workload provisioning component 510 may invoke workload encryption component to validate that a workload is encrypted. Upon determining that the workload is encrypted, workload provisioning component may invoke signature inspection component to validate that the workload is signed by a trusted party (e.g., using a certificate that matches one of a set of approved certificates). Upon determining that the workload is signed by a trusted party and using an approved certificate, workload provisioning component 510 may provision the workload to the TEE by deploying the workload to an encrypted memory of the TEE.

TCA provisioning component 520 may be used by an administration service to provision a TCA on computer system 500. During the provisioning process of the TCA, the administration service may determine a set of signing certificates associated with one or more tenants of computer system 500. In an implementation, TCA provisioning component 520 may create tenant certificate data 564 and may associate tenant certificate data 564 with the TCA, to be used for verifying a signing certificate of workloads during execution of the TCA. Similarly, TCA provisioning component 520 may create third party certificate data 564 representing certificates associated with one or more trusted third parties of the trusted execution environment, and may associate third party certificate data 562 with the TCA. As an example, a trusted third party may be an independent software vendor (ISV) associated with the workload, a repository where the workload is stored, or an orchestration system within computer system 500. Third party certificate data 562 may be used by the TCA during execution time for validating a signing certificate of a workload before provisioning a workload to the TEE environment.

In an implementation, TCA provisioning component 520 may further define one or more restricting policies indicating how to restrict workload provisioning to the TEE based on the set of approved certificates. TCA provisioning component 520 may store the restricting policies at restricting policies 568. For example, a restricting policy may indicate that workloads that are signed by at least one certificate of tenant certificate data 564 or third party certificate data 562 may be provisioned to the TEE. In another example, a restricting policy may indicate that workloads that are signed by a minimum number of combined certificates from tenant certificate data 564 and third party certificate data 562 may be provisioned to the TEE. In an implementation, each restricting policy 568 may be associated with a tenant of the TEE.

In certain implementations, TCA provisioning component 520 may add new certificates to tenant certificate data 564 and/or third party certificate data 562 during the execution of the TCA. Subsequent validation of workload certificates may use the updated set of certificates 562, 564 including the new certificates. Similarly, TCA provisioning component 520 may remove certificates from tenant certificate data 564 and/or third party certificate data 562 during the execution of the TCA. Subsequent validation of workload certificates may use the updated set of certificates 562, 564, excluding the removed certificates.

Signature inspection component 530 may be responsible for determining a singing certificate of a workload and for matching the workload certificate with one of tenant certificate data 564 or third party certificate data 562, in order to decide whether the workload may be deployed to the TEE. In an implementation, signature inspection component 530 may determine whether the workload is signed by a signing party. If the workload is signed by a signing party, signature inspection component 530 may determine a certificate associated with the signing party of the workload. Signature inspection component 530 may then compare the certificate with approved certificates within third party certificates data 562 and tenant certificate data 564 to determine of the signing certificate of the workload matches an approved certificate. In one implementation, signature inspection component 530 may determine that two signing certificates match by determining that the two certificates have the same owner, that the two certificates have a matching public key value, that other corresponding fields of the certificates match, or a combination thereof. On the other hand, if signature inspection component 530 determines that the workload is not assigned, or that the signing certificate of the workload does not match an approved certificate, signature inspection component 530 may determine that the workload may be restricted from provisioning to the TEE.

Workload encryption component 540 may be responsible for encrypting and decrypting a workload before provisioning to the TEE. In an implementation, workload encryption component 540 may have access to one or more encryption key pairs 566 that include a private key that is kept secret and a mathematically linked public key that is made available to others. The public key may be published without compromising security, and may be used to encrypt workloads. Workload encryption component 540 may then decrypt the encrypted workload using the corresponding private key of encryption key pairs 566 and may verify signatures generated by the corresponding private key. In this case, each encryption key pair may be associated with a certificate of tenant certificates 564 or third party certificate 563. Upon receiving an encrypted workload, workload encryption component 540 may decrypt the workload using a corresponding private key of encryption key pairs 566. Upon successful decryption of the workload and successful validation of the signing certificate of the workload by signature inspection component 530, workload encryption component 540 may re-encrypt the workload using a corresponding public key of the encryption key pairs 566, prior to deploying the workload to the TEE.

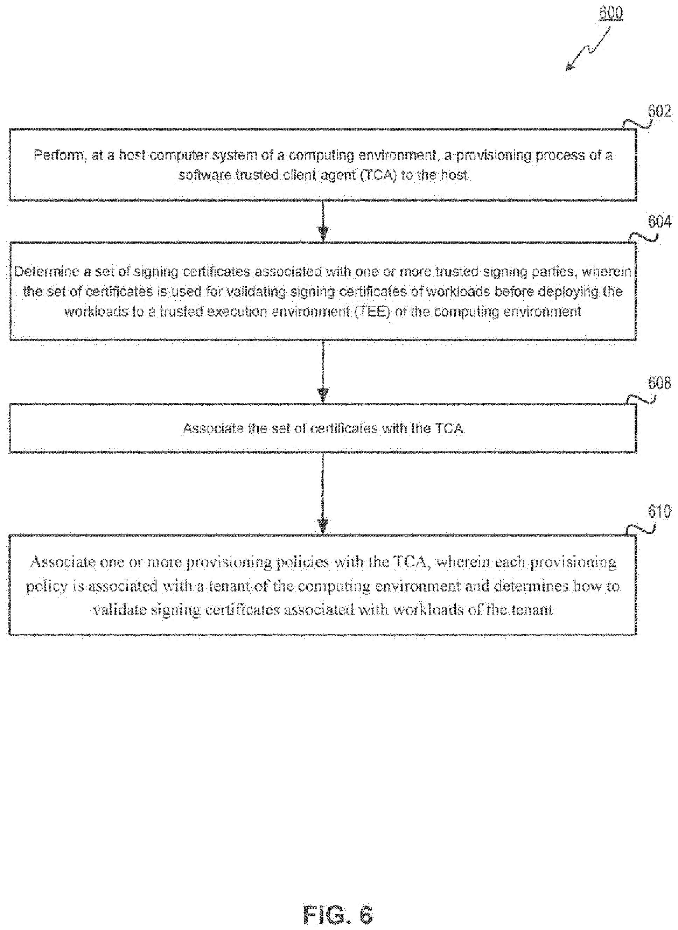

**FIG. 6** is a flow diagram of an example method of provisioning a trusted client agent (TCA) by an administration system of a computing environment, in accordance with one or more aspects of the present disclosure. Method 600 may be performed by processing logic that includes hardware (e.g., circuitry, dedicated logic, programmable logic, microcode, etc.), software (e.g., instructions run on a processor to perform hardware simulation), or a combination thereof. Method 600 or each of its individual functions, routines, subroutines, or operations may be performed by one or more processors of a computer system (e.g., the computer system 500 of **FIG. 5** or apparatus 700 of **FIG. 7**) implementing the method. In an illustrative example, method 600 may be performed by a single processing thread. Alternatively, method 600 may be performed by two or more processing threads, each thread implementing one or more individual functions, routines, subroutines, or operations of the method. In an illustrative example, the processing threads implementing method 600 may be synchronized (e.g., using semaphores, critical sections, or other thread synchronization mechanisms). Alternatively, the processing threads implementing method 600 may be executed asynchronously with respect to each other. Therefore, while **FIG. 6** and the associated description lists the operations of method 600 in certain order, various implementations of the method may perform at least some of the described operations in parallel or in arbitrary selected orders.

At operation 602, the processing logic may perform a provisioning process of a software trusted client agent (TCA) to a computing environment. In implementations, the processing logic may provision the TCA to the computing environment when the computing environment is being setup. The provisioned TCA may continue to run to securely provision workloads to be executed at TEEs of the computing environment, as explained in more details herein. In one implementation, the TCA may be associated with one or more tenants of the TEE. A TCA may provision workloads of tenants associated with the TCA.

At operation 604, the processing logic may determine a set of signing certificates associated with one or more trusted signing parties. In an implementation, the trusted signing parties may be tenants of the computing environment, repositories of workloads to be provisioned to the TEE, ISV, or an orchestration system transmitting workloads to the TEE. The set of certificates is used for validating signing certificates of workloads before deploying the workloads to the TEE.

At operation 608, upon determining the set of certificates, the processing logic may associate the set of certificates with the TCA, such that the TCA can use the set of certificates for validating signing certificates of workloads before provisioning the workload to the TEE. In one implementation, the processing logic may update the set of certificates by adding new certificates or removing existing certificates during the execution of the TCA, as explained herein above.

At operation 610, the processing logic may associate one or more provisioning policies with the TCA, enabling the TCA to determine how to securely validate signing certificates of workloads. Each provisioning policy is associated with a tenant of the TEE and determines how to validate signing certificates associated with workloads of the tenant. As an example, one provisioning policy may determine that only one valid certificate may be required to sign the workload in order to provision the workload to the TEE. Another provisioning policy may dictate that a certain combination of valid certificates may be required to sign the workload in order to provision the workload to the TEE.

**FIG. 7** depicts a block diagram of an illustrative apparatus 700 operating in accordance with one or more aspects of the disclosure. In various illustrative examples, apparatus 700 may be represented by computing environment 100 of **FIG. 1****.** Apparatus 700 comprises a memory 740 and processing device operatively coupled to the memory 740 and executes code implementing workload deployment component 710, TCA administration module 720, and workload encryption/decryption module 730. Memory 740 may store certificates 742 representing cryptographic certificates associates with one or more tenants or trusted third parties, as determined by TCA administration module 720. Workload deployment component 710 may utilize provisioning policies 744 to determine whether or not to deploy workloads at a trusted execution environment that is deployed at apparatus 700. Memory 740 may further store private keys 743 that may be used by workload encryption/decryption module 730 for encrypting and decrypting security-critical workloads before deploying the security-critical workloads to the trusted execution environment. The processing device of apparatus 700 may include a workload deployment component 710 operating in accordance with one or more aspects of the present disclosure. In an illustrative example, workload deployment component 710 may implement methods 200, 300, 400 and/or 600 of **FIGs. 2****,** **3****,** **4****, and** **6****.**

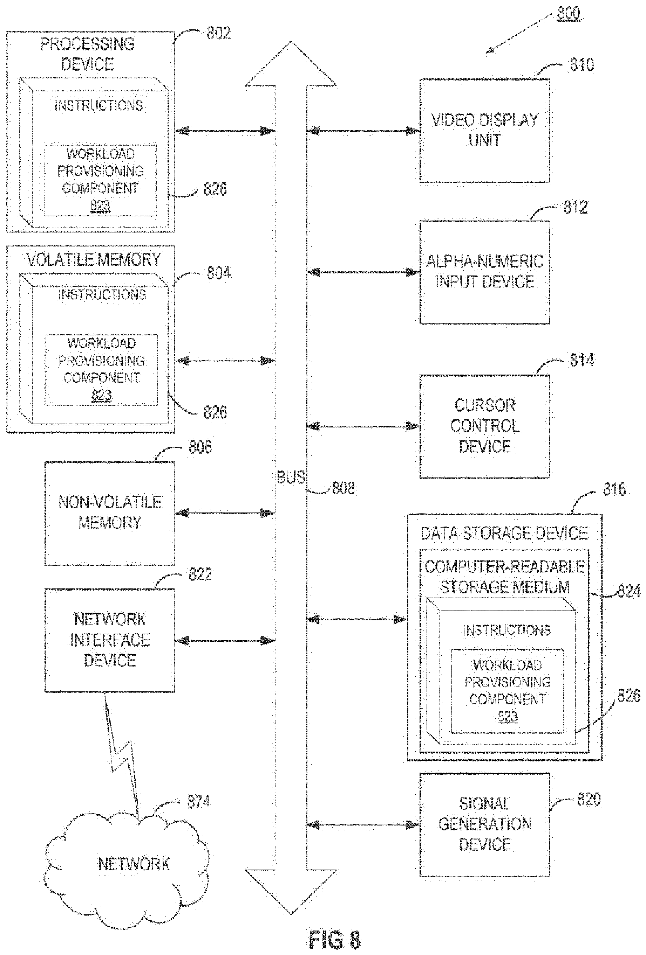

**FIG. 8** illustrates a diagrammatic representation of a machine in the exemplary form of a computer system 800 within which a set of instructions, for causing the machine to perform any one or more of the methodologies discussed herein, may be executed. The computer system 800 may correspond to computer system 100 of **Fig. 1****.** In embodiments of the present invention, the machine may be connected (e.g., networked) to other machines in a Local Area Network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines (e.g., computers) that individually or jointly execute a set (or multiple sets) of instructions to perform any one or more of the methodologies discussed herein.

The exemplary computer system 800 includes a processing device 802, a main memory 804 (e.g., read-only memory (ROM), flash memory, dynamic random access memory (DRAM) such as synchronous DRAM (SDRAM) or Rambus DRAM (RDRAM), etc.), a static memory 806 (e.g., flash memory, static random access memory (SRAM), etc.), and a secondary memory 816 (e.g., a data storage device), which communicate with each other via a bus 850.

The processing device 802 represents one or more general-purpose processors such as a microprocessor, central processing unit, or the like. The term "processing device" is used herein to refer to any combination of one or more integrated circuits and/or packages that include one or more processors (e.g., one or more processor cores). Therefore, the term processing device encompasses a single core CPU, a multi-core CPU and a massively multi-core system that includes many interconnected integrated circuits, each of which may include multiple processor cores. The processing device 802 may therefore include multiple processors. The processing device 802 may include a complex instruction set computing (CISC) microprocessor, reduced instruction set computing (RISC) microprocessor, very long instruction word (VLIW) microprocessor, processor implementing other instruction sets, or processors implementing a combination of instruction sets. The processing device 802 may also be one or more special-purpose processing devices such as an application specific integrated circuit (ASIC), a field programmable gate array (FPGA), a digital signal processor (DSP), network processor, or the like.

The computer system 800 may further include a network interface device 808. The computer system 800 also may include a video display unit 810 (e.g., a liquid crystal display (LCD) or a cathode ray tube (CRT)), an alphanumeric input device 812 (e.g., a keyboard), a cursor control device 814 (e.g., a mouse), and a signal generation device 816 (e.g., a speaker).

The secondary memory 821 may include a machine-readable storage medium (or more specifically a computer-readable storage medium) 828 on which is stored one or more sets of instructions 822 embodying any one or more of the methodologies or functions described herein (e.g., workload provisioning component 823). The instructions 822 may also reside, completely or at least partially, within the main memory 804 and/or within the processing device 802 during execution thereof by the computer system 800; the main memory 804 and the processing device 802 also constituting machine-readable storage media.

While computer-readable storage medium 828 is shown in the illustrative examples as a single medium, the term "computer-readable storage medium" shall include a single medium or multiple media (e.g., a centralized or distributed database, and/or associated caches and servers) that store the one or more sets of executable instructions. The term "computer-readable storage medium" shall also include any tangible medium that is capable of storing or encoding a set of instructions for execution by a computer that cause the computer to perform any one or more of the methods described herein. The term "computer-readable storage medium" shall include, but not be limited to, solid-state memories, optical media, and magnetic media.

The methods, components, and features described herein may be implemented by discrete hardware components or may be integrated in the functionality of other hardware components such as ASICS, FPGAs, DSPs or similar devices. In addition, the methods, components, and features may be implemented by component modules or functional circuitry within hardware devices. Further, the methods, components, and features may be implemented in any combination of hardware devices and computer program components, or in computer programs.

Unless specifically stated otherwise, terms such as "reading," "setting," "detecting," "obtaining," or the like, refer to actions and processes performed or implemented by computer systems that manipulates and transforms data represented as physical (electronic) quantities within the computer system registers and memories into other data similarly represented as physical quantities within the computer system memories or registers or other such information storage, transmission or display devices. Also, the terms "first," "second," "third," "fourth," etc. as used herein are meant as labels to distinguish among different elements and may not have an ordinal meaning according to their numerical designation.

Examples described herein also relate to an apparatus for performing the methods described herein. This apparatus may be specially constructed for performing the methods described herein, or it may comprise a general purpose computer system selectively programmed by a computer program stored in the computer system. Such a computer program may be stored in a computer-readable tangible storage medium.

The methods and illustrative examples described herein are not inherently related to any particular computer or other apparatus. Various general purpose systems may be used in accordance with the teachings described herein, or it may prove convenient to construct more specialized apparatus to perform methods 300-400 of Figs. 3-4 and/or each of their individual functions, routines, subroutines, or operations. Examples of the structure for a variety of these systems are set forth in the description above.

The above description is intended to be illustrative, and not restrictive. Although the present disclosure has been described with references to specific illustrative examples and implementations, it will be recognized that the present disclosure is not limited to the examples and implementations described. The scope of the disclosure should be determined with reference to the following claims, along with the full scope of equivalents to which the claims are entitled.

Other computer system designs and configurations may also be suitable to implement the systems and methods described herein. The following examples illustrate various implementations in accordance with one or more aspects of the present disclosure.
Example 1 is a method, comprising: receiving, by a software trusted client agent (TCA) residing in a host computer system of a computing environment, a software provisioning command from an orchestration system of the computing environment, wherein the software provisioning command identifies a workload to be provisioned to a trusted execution environment (TEE) of the computing environment; determining, by the TCA, a validation measure associated with the workload; and responsive to determining that the validation measure satisfies a predetermined condition, performing the software provisioning operation to deploy the workload at the TEE.
Example 2 is a method of example 1, wherein the validation measure is a signing certificate associated with the workload.
Example 3 is a method of example 1, wherein determining that the validation measure satisfies the predetermined condition comprises determining that a signing certificate of the workload matches a second signing certificate of a set of approved certificates associated with the TCA.
Example 4 is a method of example 3, wherein the signing certificate of the workload is associated with at least one of a tenant of the computing environment, an approved repository of the workload, an independent software vendor, or the orchestration system.
Example 5 is a method of example 1, wherein the TCA is provisioned by an administration system, and wherein the TCA is associated with a set of approved certificates during the provisioning by the administration system.
Example 6 is a method of example 5 further comprising at least one of: adding certificates to the set of approved certificates of the TCA; or removing certificates from the set of approved certificates of the TCA.
Example 7 is a method of example 1 further comprising: determining, by the TCA, whether the workload is encrypted using a predetermined encryption key; and responsive to determining that the workload is encrypted using the predetermined encryption key, performing the software provisioning operation to deploy the workload to the TEE.
Example 8 is a method of example 7, wherein the TCA is to decrypt, using the predetermined private key, the workload before deploying the workload to the TEE.
Example 9 is a method of example 1, wherein the TCA is associated with one or more tenants associated with workloads provisioned to the TEE.
Example 10 is a system comprising: a memory; and a processing device operatively coupled to the memory, wherein the processing device is further to: perform, at a a host computer system of a computing environment, a provisioning process of a software trusted client agent (TCA) to the host computer system; determine a set of signing certificates associated with one or more trusted signing parties for validating signing certificates of workloads being deployed to a trusted execution environment (TEE) of a computing environment; and associate the set of certificates with the TCA.
Example 11 is a system of example 10, wherein the processing device is further to: associate one or more provisioning policies with the TCA, wherein each provisioning policy is associated with a tenant of the computing environment and determines how to validate signing certificates associated with workloads of the tenant.
Example 12 is a system of example 10, wherein the TCA is to receive a software provisioning command from an orchestration system, wherein the software provisioning command identifies a workload to be provisioned to the TEE, and wherein the TCA is to deploy the workload to the TEE responsive to determining that a singing certificate of the workload matches a second certificate of the set of certificates associated with the TCA.
Example 13 is a system of example 10, wherein the processing device is further to: add certificates to the set of certificates associated with the TCA; and remove certificates from the set of certificates associated with the TCA.
Example 14 is a system of example 10, wherein the processing device is further to: associate one or more predetermined private keys to the TCA, wherein each private key of the one or more predetermined private keys is associated with a tenant of the computing environment and is used to encrypt and decrypt workloads associated with the tenant.
Example 15 is a system of example 10, wherein the TCA is associated with one or more tenants associated with workloads provisioned to the TEE.
Example 16 is a non-transitory computer-readable storage medium comprising executable instructions that, when executed by a processing device, cause the processing device to: receive, at a software trusted client agent (TCA) residing in a host computer system of a computing environment, a software provisioning command from an orchestration system of the computing environment, wherein the software provisioning command identifies a workload to be provisioned to a trusted execution environment (TEE) of the computing environment; determine a validation measure associated with the workload; and responsive to determining that the validation measure satisfies a predetermined condition, perform the software provisioning operation to deploy the workload at the TEE.
Example 17 is a non-transitory computer-readable storage medium of example 16, wherein the validation measure is a signing certificate associated with the workload.
Example 18 is a non-transitory computer-readable storage medium of example 16, wherein to determine that the validation measure satisfies the predetermined condition, the processing device is to determine that a signing certificate of the workload matches a second signing certificate of a set of approved certificates associated with the TCA.
Example 19 is a non-transitory computer-readable storage medium of example 18, wherein the signing certificate of the workload is associated with at least one of a tenant of the computing environment, an approved repository of the workload, an independent software vendor, or the orchestration system.
Example 20 is a non-transitory computer-readable storage medium of example 16, wherein the processing device is further to: determine whether the workload is encrypted using a predetermined encryption key; and responsive to determining that the workload is encrypted using the predetermined encryption key, perform the software provisioning operation to deploy the workload to the TEE.
Example 21 is an electronic device, comprising: a memory; and a processing device operatively coupled to the memory, wherein the processing device is further to: receive, at a software trusted client agent (TCA) residing in a a host computer system of a computing environment, a software provisioning command from an orchestration system of the computing environment, wherein the software provisioning command identifies a workload to be provisioned to a trusted computing environment (TEE); determine a validation measure associated with the workload; and responsive to determining that the validation measure satisfies a predetermined condition, perform the software provisioning operation to deploy the workload at the TEE.
Example 22 is an electronic device of example 21, wherein the validation measure is a signing certificate associated with the workload.
Example 23 is an electronic device of example 21, wherein to determine that the validation measure satisfies the predetermined condition, the processing device is to determine that a signing certificate of the workload matches a second signing certificate of a set of approved certificates associated with the TCA.
Example 24 is an electronic device of example 23, wherein the signing certificate of the workload is associated with at least one of a tenant of the computing environment, an approved repository of the workload, an independent software vendor, or the orchestration system.
Example 25 is an electronic device of example 21, wherein the processing device is further to: determine whether the workload is encrypted using a predetermined encryption key; and responsive to determining that the workload is encrypted using the predetermined encryption key, perform the software provisioning operation to deploy the workload to the TEE.
Example 26 is an apparatus comprising: a means to receive, by a software trusted client agent (TCA) residing in a of a host computer system of a computing environment, a software provisioning command from an orchestration system, wherein the software provisioning command identifies a workload to be provisioned to a trusted execution environment (TEE) ; a means to determine, by the TCA, a validation measure associated with the workload; and responsive to determining that the validation measure satisfies a predetermined condition, a means to perform the software provisioning operation to deploy the workload at the TEE.
Example 27 is an apparatus of example 26, wherein the validation measure is a signing certificate associated with the workload.
Example 28 is an apparatus of example 26, wherein the means to determine that the validation measure satisfies the predetermined condition comprises a means to determine that a signing certificate of the workload matches a second signing certificate of a set of approved certificates associated with the TCA.
Example 29 is an apparatus of example 28, wherein the signing certificate of the workload is associated with at least one of a tenant of the computing environment, an approved repository of the workload, an independent software vendor, or the orchestration system.
Example 30 is an apparatus of example 26, wherein the TCA is provisioned by an administration system, and wherein the TCA is associated with a set of approved certificates during the provisioning by the administration system.
Example 31 is an apparatus of example 26 further comprising at least one of: a means to add certificates to the set of approved certificates of the TCA; or a means to remove certificates from the set of approved certificates of the TCA.
Example 32 is an apparatus of example 26 further comprising: a means to determine, by the TCA, whether the workload is encrypted using a predetermined encryption key; and responsive to determining that the workload is encrypted using the predetermined encryption key, a means to perform the software provisioning operation to deploy the workload to the TEE.
Example 33 is an apparatus of example 32 further comprising a means to decrypt, using the predetermined private key, the workload before deploying the workload to the TEE.
Example 34 is an apparatus of example 26, wherein the TCA is associated with one or more tenants associated with workloads provisioned to the TEE.

## Claims

1. A method, compri sing:
receiving, by a software trusted client agent (TCA) residing in a host computer system of a computing environment, a software provisioning command from an orchestration system of the computing environment, wherein the software provisioning command identifies a workload to be provisioned to a trusted execution environment (TEE) of the computing environment;
determining, by the TCA, a validation measure associated with the workload; and
responsive to determining that the validation measure satisfies a predetermined condition, performing the software provisioning operation to deploy the workload at the TEE.

2. The method of claim 1, wherein the validation measure is a signing certificate associated with the workload.

3. The method of claim 1, wherein determining that the validation measure satisfies the predetermined condition comprises determining that a signing certificate of the workload matches a second signing certificate of a set of approved certificates associated with the TCA, and, optionally, wherein the signing certificate of the workload is associated with at least one of a tenant of the computing environment, an approved repository of the workload, an independent software vendor, or the orchestration system.

4. The method of claim 1, wherein the TCA is provisioned by an administration system, and wherein the TCA is associated with a set of approved certificates during the provisioning by the administration system.

5. The method of claim 5 further comprising at least one of:
adding certificates to the set of approved certificates of the TCA; or
removing certificates from the set of approved certificates of the TCA.

6. The method of claim 1 further comprising:
determining, by the TCA, whether the workload is encrypted using a predetermined encryption key; and
responsive to determining that the workload is encrypted using the predetermined encryption key, performing the software provisioning operation to deploy the workload to the TEE.

7. The method of claim 7, wherein the TCA is to decrypt, using the predetermined private key, the workload before deploying the workload to the TEE.

8. The method of claim 1, wherein the TCA is associated with one or more tenants of the computing environment.

9. A system comprising:
a memory; and
a processing device operatively coupled to the memory, wherein the processing device is further to:
perform, at a host computer system of a computing environment, a provisioning process of a software trusted client agent (TCA) to the host computer system;
determine a set of signing certificates associated with one or more trusted signing parties for validating signing certificates of workloads being deployed to a trusted execution environment (TEE) of the computing environment; and
associate the set of certificates with the TCA.

10. The system of claim 10, wherein the processing device is further to:
associate one or more provisioning policies with the TCA, wherein each provisioning policy is associated with a tenant of the computing environment and determines how to validate signing certificates associated with workloads of the tenant.

11. The system of claim 10, wherein the TCA is to receive a software provisioning command from an orchestration system, wherein the software provisioning command identifies a workload to be provisioned to the TEE, and wherein the TCA is to deploy the workload to the TEE responsive to determining that a singing certificate of the workload matches a second certificate of the set of certificates associated with the TCA.

12. The system of claim 10, wherein the processing device is further to:
add certificates to the set of certificates associated with the TCA; and
remove certificates from the set of certificates associated with the TCA.

13. The system of claim 10, wherein the processing device is further to:
associate one or more predetermined private keys to the TCA, wherein each private key of the one or more predetermined private keys is associated with a tenant of the computing environment and is used to encrypt and decrypt workloads associated with the tenant.

14. The system of claim 10, wherein the TCA is associated with one or more tenants of the computing environment.

15. A non-transitory computer-readable storage medium comprising executable instructions that, when executed by a processing device, cause the processing device to perform the method of any of claims 1 to 8 or to:
receive, at a software trusted client agent (TCA) residing in a host computer system of a computing environment, a software provisioning command from an orchestration system of the computing environment, wherein the software provisioning command identifies a workload to be provisioned to a trusted execution environment (TEE) of the computing environment;
determine a validation measure associated with the workload; and
responsive to determining that the validation measure satisfies a predetermined condition, perform the software provisioning operation to deploy the workload at the TEE.
